# EUROPÄISCHE PATENTSCHRIFT

(11) **EP 2 027 001 B1**
(45) Veröffentlichungstag und Bekanntmachung des Hinweises auf die Patenterteilung: **02.04.2014**
(21) Anmeldenummer: 07729409.8
(22) Anmeldetag: 22.05.2007
(51) Int. Cl.: B60T 8/24, B60T 13/08, B60D 1/32

(54) **HYDRAULISCHE ANHÄNGERBREMSANLAGE**
HYDRAULIC TRAILER BRAKE SYSTEM
SYSTEME DE FREINAGE HYDRAULIQUE POUR REMORQUE

(30) Priorität: 22.05.2006 DE 102006024160; 03.07.2006 DE 102006030924; 18.07.2006 DE 102006033590; 22.05.2007 DE 102007024108
(43) Veröffentlichungstag der Anmeldung: 25.02.2009
(60) Teilanmeldung: 11165110.5
(73) Patentinhaber: Continental Teves AG & Co. oHG, 60488 Frankfurt (DE)
(72) Erfinder: DOMSALLA, Eberhard, 65558 Burgschwalbach (DE); GASTAUER, Heiko, 66679 Losheim (DE); GREIFF, Uwe, 51352 Bad Homburg (DE); HARTMANN, Ralf, 65830 Kriftel (DE); HEISE, Andreas, 64390 Erzhausen (DE); HINZ, Axel, 61267 Neu-Anspach (DE); HOFFMANN, Jan, 61191 Rossbach (DE); WOLF, Hans-Peter, 65527 Niedernhausen (DE)
(86) Internationale Anmeldenummer: PCT/EP2007/054970
(87) Internationale Veröffentlichungsnummer: WO 2007/135160

(56) Entgegenhaltungen:
- EP-A1- 1 308 358
- EP-A1- 1 375 279
- WO-A-97/13669
- WO-A-2004/041614
- DE-U1- 20 116 706
- DE-U1- 20 316 698

## Beschreibung

Die Erfindung betrifft eine hydraulische Anhängerbremsanlage nach dem Oberbegriff des Anspruchs 1.

In der EP 1 375 279 A1 ist eine gattungsgemäße Anhängerbremsanlage zum Abbremsen der Räder eines auflaufgebremsten Anhängers zur Verringerung von Schlingerbewegungen offenbart. Die Bremsanlage weist eine mit einem Antiblockiersystem kombinierte elektro-hydraulische Stabilisierungseinrichtung EHS auf, die beide Seiten des Anhängers im Fall von Schlingerbewegungen individuell abbremsen kann. Hierzu sind spezielle Zusatzdruckölspeicher, spezielle ABS-Kolben-Zylinder-Komponenten sowie spezielle EHS-Zylinder-Kolben-Komponenten vorgesehen, mittels denen die ABS-Funktion und die EHS-Funktion durchgeführt werden können.

Aus der DE 19964048 A1 ist eine Vorrichtung zum Stabilisieren eines Straßenfahrzeugs, insbesondere eines Personenkraftwagens, mit einem durch das Straßenfahrzeug gezogenen Anhänger bekannt, wobei das Straßenfahrzeug in Bezug auf Schlingerbewegungen überwacht und dem Straßenfahrzeug bei Erkennen einer Schlingerbewegung automatisch ein im Wesentlichen periodisches Giermoment eingeprägt wird, das der Schlingerbewegung im Wesentlichen gegenphasig ist.

Aus der DE 100 48 418 A1 ist ein Verfahren zur Stabilisierung eines Fahrzeugs bekannt, wobei ein sich periodisch veränderndes Giermoment durch wechselseitigen Bremseingriff auf das Fahrzeug aufgebracht wird.

Die DE 203 16 698 U1 offenbart eine Anhängerdeichsel für Fahrzeuganhänger mit einer Stabilisierungskugelkupplung, die eine auf eine Zugkugel eines Zugfahrzeugs aufsetzbare Kalotte und eine an der Kalotte vorgesehene Stabilisierungseinrichtung in der Form einer Reibelementeinrichtung aufweist, die mit der Zugkugel zusammenwirkt, um Schlingerbewegungen des Fahrzeuganhängers zu dämpfen, welche eine Überwachungseinrichtung zur Überwachung der von der Stabilisierungseinrichtung erzeugten Dämpfung umfasst.

Aus der WO 2004/041614 A1 ist ein Verfahren und eine Einrichtung zum Stabilisieren eines Gespanns mit einem Zugfahrzeug und einem durch das Zugfahrzeug bewegten Anhänger bekannt, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden. Das Verfahren umfasst die Schritte Ermitteln und Bewerten von den Schlingerbewegungen im Hinblick auf kritische oder unkritische Fahrzustände und Verzögern des Zugfahrzeugs in Abhängigkeit von den Amplituden der Schlingerbewegungen.

In der DE 201 16 706 U1 ist eine Zugkugelkupplung eines Anhängers offenbart, mit einer Kugelkalotte, die eine Zugkugel eines Fahrzeugs umschließt, mit einer Stabilisierungseinrichtung zur Verminderung von Schlingerbewegungen des Anhängers, welche mindestens eine im Bereich der Kugelkalotte angeordnete Zuspanneinrichtung mit einem Reibelement zur Beeinflussung der Reibkräfte zwischen Kugelkalotte und Zugkugel umfasst, wobei das Reibelement hydraulisch mit einem von der Geschwindigkeit des Anhängers abhängigen Anpressdruck an die Zugkugel anpressbar ist.

Der Erfindung liegt die Aufgabe zugrunde, eine einfache und kostengünstige Anhängerbremsanlage der eingangs genannten Art zu schaffen, mit der auf einfache Weise bei Aufrechterhaltung einer hohen Bremsstabilität Schlingerbewegungen von Anhängern unterbunden bzw. verringert werden können.

Diese Aufgabe wird erfindungsgemäß durch eine Vorrichtung mit den Merkmalen des Anspruch 1 gelöst.

Die erfindungsgemäße hydraulische Anhängerbremsanlage mit einer Einrichtung zum Abbremsen der Räder des Anhängers und mit einem steuerbaren Druckerzeuger zur rad- oder achsindividuellen Ansteuerung der Radbremsen, wobei der Einrichtung eine hydraulische Bremskraftübertragungsvorrichtung mit einem Vorratsbehälter für das Druckmittel und einem Hauptbremszylinder zugeordnet ist und die Bremskraftübertragungsvorrichtung über Bremsleitungen mit den Radbremsen verbunden ist, sowie einer elektronischen Steuer- oder Regelungseinheit, die über eine Versorgungseinheit Energie erhält, zeichnet sich dadurch aus, dass der Hauptbremszylinder mit einer Bremsleitung verbunden ist, in der ein erstes Trennventil angeordnet ist,
dass die Bremsleitung nach dem ersten Trennventil über eine erste Bremsdruckteilleitung mit einem ersten Einlassventil mit der ersten Radbremse und über eine zweite Bremsdruckteilleitung mit einem zweiten Einlassventil mit der zweiten Radbremse einer ersten Anhängerachse verbunden ist, dass die Bremsleitung vor oder nach dem ersten Trennventil über eine dritte Bremsdruckteilleitung mit einem dritten Einlassventil mit den Radbremsen einer zweiten Anhängerachse verbunden ist,

dass in einer Bypassleitung um das erste Trennventil ein erstes Umschaltventil und eine erste elektrisch ansteuerbare Druckmittelpumpe vorgesehen sind, deren Saugseite mit dem ersten Umschaltventil, der ersten Radbremse über ein erstes Auslassventil, der zweiten Radbremse über ein zweites Auslassventil, den Radbremsen der zweiten Anhängerachse über ein drittes Auslassventil und einem ersten Niederdruckspeicher und deren Druckseite mit dem ersten Trennventil und mindestens mit dem ersten Einlassventil und dem zweiten Einlassventil verbunden ist,
und dass eine zweite Druckmittelpumpe vorgesehen ist, die Druckmittel aus dem Vorratsbehälter in Aktuatoren einer Stabilisierungskupplung fördert, welche die Spannkraft der Stabilisierungskupplung zwischen Anhänger und Zugfahrzeug verändern können.

Die hydraulische Anhängerbremsanlage zur Fahrstabilisierung von Fahrzeug-Anhängern basiert vorteilhaft auf einem bei Fahrzeugen verwendeten, modifizierten ESP-System mit vorzugsweise zwei Bremskreisen. Zur Stabilisierung eines mindestens einachsigen PKW-Anhängers werden die Radbremsen an einen Bremskreis angeschlossen und die Stabilisierungs-Kugelkupplung an den anderen Druckkreis angeschlossen. Mit den Brems- bzw. Druckkreisen können auch weitere Komponenten bzw. Baugruppen, wie z.B. Hochdruckspeicher und/oder Hydraulikkzylinder, verbunden werden. Die Radbremsen können dabei individuell oder paarweise angesteuert werden.

Durch einen modifizierten Schaltkreis eines ESP-System kann vorteilhaft ein aktiver Druckaufbau in den Radbremsen des Anhängers erfolgen.

Weitere technische Vorteile sind das mögliche achsweise oder seitenweise Ansteuern von Rädern (2 Kanal). Dadurch kann eine höhere Regelgüte durch gezielte Einbringung eines Giermomentes zur Verringerung der Schlingerbewegungen erzielt werden.

Ein weiterer technischer Vorteil im Vergleich zu vorhandenen Systemen ist, dass Undichtigkeiten im Kugelstabilisierungskupplungskreis erkannt werden, und dieser Kreis eine Nachlaufverbindung hat.

Vorteilhafte Ausführungsformen der erfindungsgemäßen hydraulischen Anhängerbremsanlage sind in den Unteransprüchen beschrieben.

Vorteilhaft ist, dass der Hauptzylinder mit einer Bremsleitung verbunden ist, die nach dem ersten Trennventil über eine Bremsdruckteilleitung mit einem ersten Einlassventil mit der ersten Radbremse und über eine Bremsdruckteilleitung mit dem ersten Einlassventil mit der zweiten Radbremse einer ersten Anhängerachse verbunden ist und dass die Bremsleitung nach dem Trennventil über eine Bremsdruckteilleitung mit einem ersten Einlassventil mit den Radbremsen einer zweiten Anhängerachse verbunden ist.

Zum Abbau des Bremsdruckes ist es vorteilhaft, dass die Radbremsen mit Rücklaufleitungen verbunden sind, in denen jeweils ein erstes Auslassventil angeordnet ist, wobei die Rücklaufleitungen mit dem ersten Niederdruckspeicher und über eine Leitung mit der Saugseite der ersten Pumpe und dem ersten Umschaltventil verbunden sind, das an die Bremsleitung angeschlossen ist.

Mit diesem Druck- bzw. Bremskraftübertragungskreis können zwei Räder und ein Radpaar geregelt werden.
Bei einer Normalbremsung wird von dem Hauptbremszylinder Druck in allen 4 Rädern erzeugt.
Bei Rückwärtsfahrten werden die Einlassventile geschlossen und das Volumen in den Radsätteln mittels Auslassventilen zum Niederdruckspeicher geleitet.
In Gefahrensituationen wird das Trennventil geschlossen und das elektrische Umschaltventil geöffnet. Die Pumpe fördert nun Druckmittel aus dem Niederdruckspeicher bzw. durch das elektrische Umschaltventil aus dem Hauptzylinder über das/die Einlassventil/e zu den entsprechenden Rädern. Um ein schnelles Ansprechen des Anhängers zu erreichen, wird das Einlassventil für das Radpaar zeitverzögert (erst wenn der gewünschte Druck in den beiden geregelten Rädern ansteht) geöffnet. Die Verringerung des Bremsdruckes erfolgt durch Druck- bzw. Volumenabbau (in den Radsätteln) über das/die Auslassventil/e, von welchem das Druckmittel zum Niederdruckspeicher strömt und (falls erforderlich) mit der Pumpe wieder in den Hauptzylinder gefördert wird.

ABS: Wenn ein Rad blockiert, wird das entsprechende Einlassventil geschlossen und das entsprechende Auslassventil geöffnet. Über das Auslassventil strömt das Druckmittel von dem entsprechenden Rad bzw. Radpaar zum Niederdruckspeicher, von welchem das Druckmittel mittels Pumpe über das Trennventil zum Hauptzylinder zurückgefördert wird.

Weiterhin ist die hydraulische Anhängerbremsanlage zweckmäßig so ausgebildet, dass der Vorratsbehälter mit einer zweiten Druckleitung verbunden ist, die nach dem zweiten Trennventil über eine Druckteilleitung mit einem zweiten Einlassventil mit Aktuatoren einer Stabilisierungs-Kugelkupplung verbunden ist, die Aktuatoren mit einer Rücklaufleitung verbunden sind, in der ein zweites Auslassventil angeordnet ist, wobei die Rücklaufleitung mit dem zweiten Niederdruckspeicher und über Leitung mit der Saugseite der zweiten Pumpe und dem zweiten Umschaltventil verbunden ist, das an die Leitung angeschlossen ist.

In einer Gefahrensituation kann die im Normalfall geschwindigkeitsabhängig geregelte Druckmittelzufuhr in die Aktuatoren der Stabilisierungs-Kupplung zusätzlich zur Stabilisierung der Verbindung zwischen Zugfahrzeug und Anhänger verwendet werden. Hierzu wird das Trennventil geschlossen und das elektrische Umschaltventil, über welches die Pumpe das Druckmittel zu zwei Kolben der Aktuatoren an der Kugelkupplung befördert, geöffnet. Hierdurch kann die auf die Kupplung wirkende Reibung beliebig eingestellt werden. Wenn das Reibmoment gesenkt werden soll, wird das Einlassventil geschlossen und das Auslassventil geöffnet. Über das Auslassventil strömt das Fluid von dem Kolben zum Niederdruckspeicher, von welchem das Fluid mittels Pumpe über das Trennventil zum Hauptzylinder zurückgefördert wird.

Die Energieversorgung der den Pumpen zugeordneten Pumpenantriebsmotoren erfolgt über eine separate Versorgungseinheit. Hierzu ist vorgesehen, dass die Versorgungseinheit Akkumulatoren, vorzugsweise ein ACCU Pack, enthält, die über ein Verbindungselement zwischen Fahrzeug und Anhänger mit der Batterie des Fahrzeugs verbunden sind, wobei die Akkumulatoren mit der Steuer- und Regelungseinheit verbunden sind.

Eine vorteilhafte Ausführungsform sieht vor, dass der Hauptzylinder mit einer Bremsleitung verbunden ist, die nach dem ersten Trennventil über eine Bremsdruckteilleitung mit einem ersten Einlassventil mit der ersten Radbremse und über eine Bremsdruckteilleitung mit einem zweiten Einlassventil mit der zweiten Radbremse einer ersten Anhängerachse verbunden ist und dass die Bremsleitung vor dem Trennventil über eine Bremsdruckteilleitung mit einem dritten Einlassventil mit den Radbremsen einer zweiten Anhängerachse verbunden ist.

Mit diesem Druck- bzw. Bremskraftübertragungskreis ist eine individuelle Druckaufbauregelung für zwei Räder an einer Achse und ein Räderpaar an einer anderen Achse realisierbar.

Eine Druckabbauregelung ist ebenfalls für zwei Räder und ein Radpaar vorgesehen.
Bei einer Normalbremsung wird von dem Hauptbremszylinder Druck in allen vier Rädern erzeugt.
Bei Rückwärtsfahrten werden die Einlassventile geschlossen und das Volumen in den Radsätteln mittels Auslassventilen zum Niederdruckspeicher geleitet.
In Gefahrensituationen wird das Trennventil geschlossen und das elektrische Umschaltventil geöffnet. Die Pumpe fördert nun Druckmittel aus dem Niederdruckspeicher bzw. durch das elektrische Umschaltventil aus dem Hauptzylinder über das/die Einlassventil/e zu den entsprechenden Rädern. Die Verringerung des Bremsdruckes erfolgt durch Druck- bzw. Volumenabbau (in den Radsätteln) über das/die Auslassventil/e, von welchem das Fluid zum Niederdruckspeicher strömt und falls erforderlich mit der Pumpe wieder in den Hauptzylinder gefördert wird.

ABS: Wenn ein Rad blockiert, wird das entsprechende Einlassventil geschlossen und das entsprechende Auslassventil geöffnet. Über das Auslassventil strömt das Fluid von dem entsprechenden Rad bzw. Radpaar zum Niederdruckspeicher, von welchem die Bremsflüssigkeit mittels Pumpe über das Trennventil zum Hauptzylinder zurückgefördert wird.

In einer Gefahrensituation wird auch bei dieser Ausführungsform die Verbindung zwischen Zugfahrzeug und Anhänger stabilisiert. Hierzu wird das Trennventil geschlossen und das elektrische Umschaltventil, über welches die Pumpe die Bremsflüssigkeit zu zwei Kolben an der Kugelkupplung befördert, geöffnet. Hierdurch kann die auf die Kupplung wirkende Reibung beliebig eingestellt werden. Wenn das Reibmoment gesenkt werden soll, wird das Einlassventil geschlossen und das Auslassventil geöffnet. Über das Auslassventil strömt die Bremsflüssigkeit von dem Kolben zum Niederdruckspeicher, von welchem die Bremsflüssigkeit mittels Pumpe über das Trennventil zum Hauptzylinder zurückgefördert wird.

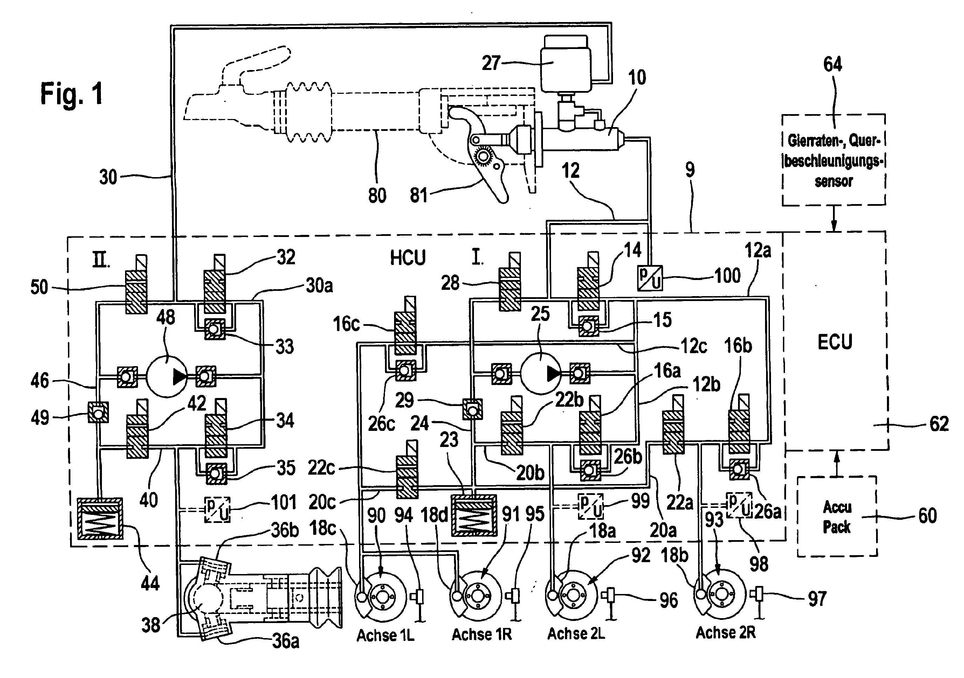

Ferner ist es im Unterschied zu der Ausführung nach Figur 1 bei dem Druckübertragungskreis zur Ansteuerung der Stabilisierungs-Kugelkupplung zweckmäßig, dass der Vorratsbehälter mit einer zweiten Druckleitung verbunden ist, in der ein zweites Trennventil über eine Druckteilleitung mit den Aktuatoren der Stabilisierungs-Kugelkupplung verbunden ist, wobei die Druckleitung über eine Leitung mit der Saugseite der zweiten Pumpe verbunden ist. Der Druck- bzw. Bremskraftübertragungskreis I entspricht dabei in seiner Ausbildung dem Druck- bzw. Bremskraftübertragungskreis in Figur 1, so dass eine nähere Beschreibung entfallen kann.

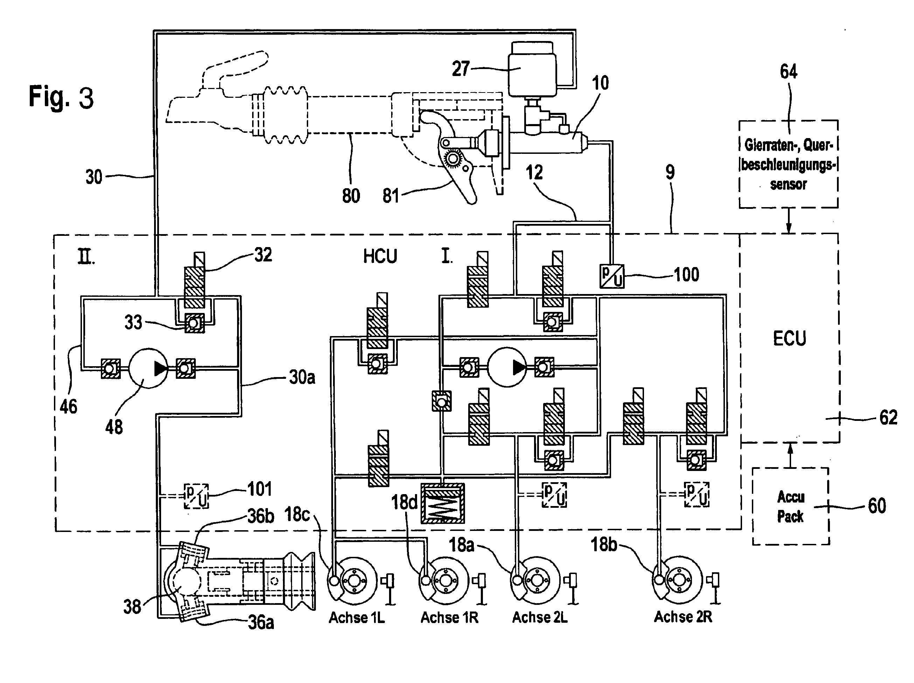

Weiterhin ist es im Unterschied zu der Ausführung nach Figur 3 bei dem Druckübertragungskreis zur Ansteuerung der Stabilisierungs-Kugelkupplung zweckmäßig, dass in der Druckteilleitung vor den Aktuatoren der Stabilisierungs-Kugelkupplung ein Auslassventil angeordnet ist.

Ein Ausführungsbeispiel der Erfindung ist in der Zeichnung dargestellt und wird im Folgenden näher beschrieben.

Es zeigen
- Fig. 1: eine schematische Darstellung der Schaltung der erfindungsgemäßen hydraulischen Anhängerbremsanlage,
- Fig. 2: eine Ausführungsform des in Figur 1 dargestellten hydraulischen Schaltplans
- Fig. 3: eine Ausführungsform des in Figur 1 dargestellten hydraulischen Schaltplans mit vereinfachter Schaltung zur Ansteuerung der Stabilisierungs-Kugelkupplung
- Fig. 4: eine Ausführungsform des in Figur 1 dargestellten hydraulischen Schaltplans mit geänderter Schaltung der Kugelkupplung.

Die in der Figur 1 dargestellte hydraulische Anhängerbremsanlage zur Fahrstabilisierung weist Druck- bzw. Kraftübertragungskreise auf, die in ihrer Gesamtheit mit 9 bezeichnet sind. Der eine Bremsdruckübertragungskreis I besteht aus einem Bremszylinder 10 einer Auflaufbremse 80, der durch eine mechanische Einheit 81 der Auflaufbremse 80 betätigt wird. An dem Bremszylinder 10 ist ein Vorratsbehälter 27 angeordnet, der ein Druckmittel enthält und in der Bremslösestellung an die Arbeitskammer des Bremszylinders 10 angeschlossen ist. Der dargestellte Bremsdruck-übertragungskreis weist eine an mindestens eine Arbeitskammer des Bremszylinders 10 angeschlossene Bremsleitung 12 mit einem ersten Trennventil 14 auf, das in seiner Ruhestellung einen offenen Durchgang für die Bremsleitung 12 bildet. Dem Trennventil 14 ist ein Rückschlagventil 15 parallel geschaltet, das aus Richtung des Bremszylinders 10 öffnet Das Trennventil 14 wird üblicherweise elektromagnetisch betätigt. Es sind aber auch Variationen denkbar, bei der eine hydraulische Betätigung erfolgt.

Die Bremsleitung 12 verzweigt in drei Bremsdruckteilleitungen 12a, 12b, 12c die zu Radbremsen 18a bis 18d führen. Die Bremsdruckteilleitungen 12a, 12b führen dabei jeweils zu einer Radbremse 18a bzw. 18b einer Anhängerachse, während die Bremsdruckteilleitung 12c zu dem Radbremsenpaar 18c und 18d einer Anhängerachse führt. Die Bremsdruckteilleitungen enthalten jeweils ein elektromagnetisch betätigbares Einlassventil 16a, 16b, 16c die in ihrer Ruhestellung offen sind und durch Erregung des Betätigungsmagneten in eine Sperrstellung geschaltet werden können. Jedem Einlassventil 16a bis 16 c ist ein Rückschlagventil 26a bis 26c parallel geschaltet, das aus Richtung der Radbremsen 18a, 18b bzw. 18cund 18d öffnet. Parallel zu diesen Radbremskreisen 12, 12a bis 12c ist ein sogenannter Rückförderkreis angeschlossen, der aus Rücklaufleitungen 20a bis 20c mit einer Druckmittelpumpe 25 besteht. Die Radbremsen 18a und 18b schließen über jeweils ein Auslassventil 22a und 22b und die Radbremsen 18c und 18d über ein Auslassventil 22c über die Rücklaufleitungen 20a bis 20c an die Leitung 24 an und damit an die Saugseite der Druckmittelpumpe 25, deren Druckseite mit den Bremsdruckteilleitungen 12a bis 12c in einem Einmündungspunkt zwischen dem Trennventil 14 und den Einlassventilen 16a bis 16c verbunden ist.

Die Förderpumpe 25 ist als Hubkolbenpumpe mit nicht näher dargestelltem Druckventil und einem Saugventil ausgebildet. An der Saugseite der Druckmittelpumpe 25 befindet sich ein Niederdruckspeicher 23, der mit den Rücklaufleitungen 20a bis 20c verbunden ist.

In der Verbindung zwischen dem Niederdruckspeicher 23 und der Druckmittelpumpe 25 ist ein vorgespanntes, zu der Pumpe öffnendes Rückschlagventil 29 eingesetzt.

Die Saugseite der Pumpe 25 ist weiterhin über die Zusatzleitung 24 mit einem ersten Umschaltventil 28 mit dem Bremszylinder 10 verbunden.

Der Druck- bzw. Kraftübertragungskreis 9 weist einen zweiten Steuerkreis II mit einer mit dem Vorratsbehälter 27 verbundenen Leitung 30 auf, die sich in eine Druckteilleitung 30a und eine Leitung 46 verzweigt. Druckteilleitung 30a führt über ein zweites Trennventil 32 und einem parallel geschalteten Rückschlagventil 33 zu Aktuatoren 36a, 36b einer Stabilisierungs-Kupplung 38 des Anhängers. Über Verzweigungen der Druckteilleitung 30a können die zwei Aktuatoren 36a, 36b mit dem in den Leitungen 30, 30a erzeugten Druck beaufschlagt werden. Alternativ ist es auch möglich die Aktuatoren einzeln mit dem im Vorratsbehälter 27 enthaltenen Hydraulikmittel beaufschlagen, indem zwei gleiche Druckübertragungskreise vorgesehen werden. Die Druckleitung 30a enthält weiterhin ein elektromagnetisch betätigbares Einlassventil 34, das in seiner Ruhestellung offen ist und durch Erregung des Betätigungsmagneten in eine Sperrstellung geschaltet werden kann. Dem Einlassventil 34 ist ein Rückschlagventil 35 parallel geschaltet, das in Richtung des Vorratsbehälters 27 öffnet. Parallel zu diesem Druckkreis 30, 30a ist ein sogenannter Rückförderkreis angeschlossen, der aus Rücklaufleitungen 40, 46 mit einer Druckmittelpumpe 48 besteht. Die Aktuatoren 36a, 36b schließen über ein in der Leitung 40 angeordnetes Auslassventil 42 an die Leitung 46 an und damit an die Saugseite der Druckmittelpumpe 48, deren Druckseite mit der Bremsdruckteilleitung 30a in einem Einmündungspunkt zwischen dem Trennventil 32 und dem Einlassventil 34 verbunden ist.

Die Förderpumpe 48 ist als Hubkolbenpumpe mit nicht näher dargestelltem Druckventil und einem Saugventil ausgebildet. An der Saugseite der Druckmittelpumpe 48 befindet sich ein Niederdruckspeicher 44, der mit den Rücklaufleitungen 40, 46 verbunden ist.

In der Verbindung zwischen dem Niederdruckspeicher 44 und der Druckmittelpumpe 48 ist ein vorgespanntes, zu der Pumpe öffnendes Rückschlagventil 49 eingesetzt.

Die Saugseite der Pumpe 48 ist weiterhin über die Leitung 46 und einem zweiten Umschaltventil 50 mit dem Vorratsbehälter 27 verbunden.

Wie aus der Figur 1 zu ersehen ist, sind der Druckkreis für die Aktuatoren 36a, 36b der Stabilisierungs-Kupplung 38 und der Bremsdruckkreis für die Radbremsen 18a bis 18d vorteilhaft gleich aufgebaut. Während bei dem Bremsdruckkreis drei Radbremsen 18a bis 18d, nämlich jeweils die Radbremse 18a und die Radbremse 18b separat und ein Radbremsenpaar 18c und 18d angesteuert werden, wird in dem Druckkreis der Stabilisierungs-Kupplung lediglich ein "Aktuator", nämlich die beiden Zylinder-Kolbeneinheiten, angesteuert.

Außerdem weist der Druck- bzw. Kraftübertragungskreis 9 eine elektronische Regeleinheit 62 auf. In der elektronischen Regeleinheit wird auf der Basis der den nur schematisch dargestellten Rädern 90 bis 93 zugeordneten Raddrehzahlsensoren 94 bis 97 und der den Druck- bzw. Bremskreisen zugeordneten Drucksensoren 98, 99, 100, 101 bzw. den weiteren Sensoren 64, z.B den Sensoren eines Sensorclusters, wie z.B. Querbeschleunigungssensoren, Gierratensensoren, Längsbeschleunigungssensoren Steuer- bzw. Regelsignale für die Ventile und die Pumpen 25, 48 erzeugt. Die Energieversorgung der elektronischen Regeleinheit 62 erfolgt dabei über Akkumulatoren, d.h einem Akku-Pack 60, der über eine Versorgungsleitung zwischen dem Fahrzeug und dem Anhänger mit der Fahrzeugbatterie verbunden ist.

Die Vorrichtung arbeitet wie folgt:

### Bremsen:

Das Abbremsen des Anhängers mit der Auflaufbremse 80 erfolgt immer dann, wenn die Anhängergeschwindigkeit höher ist als die Fahrgeschwindigkeit des Zugfahrzeugs. In diesem Fall wird mittels der mechanischen Einheit 81 der Auflaufbremse 80 von dem Hauptzylinder 10 Druckmittel über Bremsleitung 12, offenes Trennventil 14, offene Einlassventile 16a bis 16c zu den Radbremsen 18a bis 18d verschoben. Der Anhänger wird über alle vier Räder 90 bis 93 abgebremst.

### ABS-Regelung:

Mittels der Regeleinheit 62 zur Verfügung gestellten Drehzahlsignale der Raddrehzahlsensoren 90 bis 93 werden die Umfangsgeschwindigkeiten jedes einzelnen Rades ermittelt und mit der in der Regeleinheit 62 berechneten Fahrgeschwindigkeit im Hinblick auf Bremsschlupf logisch ausgewertet.
Steigt der Bremsschlupf in der Regel über 8 bis 30 Prozent oder blockiert dabei ein Rad der Radbremsen 18a bis 18d (100 Prozent Bremsschlupf), wird das jeweilige Einlassventil 16a bis 16c geschlossen, so dass das von dem Hauptzylinder 10 in die Bremsleitung 12 geförderte Druckmittel nicht mehr zu dem entsprechenden Rad gelangt. Durch Öffnen des jeweiligen Auslassventils 22a bis 22c erfolgt eine Druckabsenkung, indem Druckmittel aus der jeweiligen Radbremse 18a bis 18d in den Niederdruckspeicher 23 abgelassen wird. Das Druckmittel des Niederdruckspeichers 23 kann zu einem späteren Zeitpunk mittels der Pumpe in den Vorratsbehälter 27 zurückgefördert werden.

### Stabilitätsbremsung:

Der Druckaufbau in den Radbremskreisen für die Radbremsen 18a, 18b, 18c und 18d erfolgt bei geöffnetem Umschaltventil 28 und geschlossenem Trennventil 14 über die Ansteuersignale des Regelungseinheit 62 bei dem in Ausgangslage stromlos offenen Trennventil 14 und stromlos geschlossenen Umschaltventil 28. Dabei wird mittels der Druckmittelpumpe 25 über den Hauptzylinder 10 aus dem Vorratsbehälter 27 oder dem Niederdruckspeicher 23 Druckmittel in die Radbremskreise gefördert, in denen so entsprechend der berechneten Bremsdruckanforderung Druckmittel eingesteuert wird. Die Ansteuerung erfolg dabei in Abhängigkeit der ermittelten Schlingerbewegung des Anhängers. Die Schlingerbewegung wird anhand der Querbeschleunigungs- oder Giergeschwindigkeits- oder
Raddrehzahlsignalen der entsprechenden Sensoren 94 bis 97, 64 ermittelt, die in der Regelungseinheit nach einem Programm logisch ausgewertet und bewertet werden. In Abhängigkeit von dem Auswerteergebnis werden dann die Radbremsen 18a oder 18b einzeln und zwar nach einem Programm im Wesentlichen gegenphasig zur Schlingerbewegung angesteuert, um die Schlingerbewegung zu bedämpfen. Eine andere Möglichkeit besteht darin, die Radbremsen gleichzeitig anzusteuern.
Gleichzeitig oder auch vor- oder nachgeschaltet können die beiden Radbremsen 18c und 18d über den gemeinsamen Bremskreis angesteuert werden, um die Anhängergeschwindigkeit zu verringern.

Ist der Anhänger bedämpft; wird Bremsdruck über das Öffnen der jeweiligen Auslassventile 22a bis 22c, der Rücklaufleitungen 20a bis 20c in den Niederdruckspeicher 23 abgelassen, wobei die Einlassventile 16a bis 16c geschlossen werden.

Wenn durch die Kugelkupplung 38 die Schlingerbewegung des Anhängers vermindert werden soll, wird das Trennventil 32 geschlossen und Umschaltventil 50 geöffnet und die Pumpe 48 fördert Druckmittel aus dem Vorratsbehälter 27 zu den Aktuatoren 36a, 36b. Die Kugelkupplung wird mit erhöhter Reibkraft gespannt.

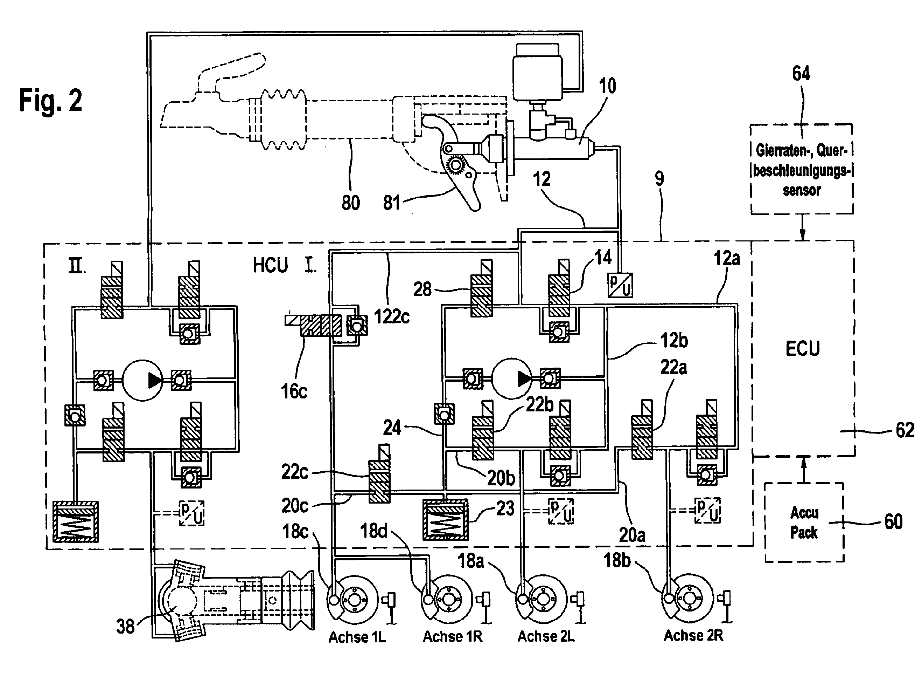

Die folgenden Ausführungsvarianten der Figuren 2 bis 4 weisen alle die im Zusammenhang mit Figur 1 beschriebenen zwei separaten Kreise auf, nämlich einmal den Ansteuerkreis für die Radbremsen 18a bis 18d und den Ansteuerkreis für die Stabilisierungs-Kupplung 38 oder weiterer Komponenten. Die hydraulischen Anhängerbremsanlagen arbeiten im Wesentlichen entsprechend nach der zuvor in Verbindung mit Figur 1 beschrieben Funktionsweise. Aus der Modifikation der Schaltung sich ergebende Abweichungen in der Funktionsweise werden jeweils einzeln beschrieben. Für gleiche Komponenten, werden gleiche Bezugszeichen verwendet, wobei aus Übersichtsgründen nicht alle Bezugszeichen in die alternativen Ausführungsvarianten eingetragen werden. Es ist für den Fachmann einfach möglich, die Bezugszeichen aus der Figur 1 auf die jeweiligen Komponenten bzw. Bauteile der entsprechenden Schaltung zu übertragen. Selbstverständlich können auch einzelne Schaltkreise der Figuren 1 bis 4 ersetzt werden, so können mit den Anhängerbremsanlagen eine Achse mit zwei Rädern oder mehr als eine Achse mit mehr Rädern angesteuert werden. Hierzu müssen lediglich identische Ansteuerkreise vorgesehen werden. So können zwei Radbremsenpaare zweier Achsen oder aber auch Radbremsen einzeln angesteuert werden.

Fig. 2. zeigt eine Alternative für die Druck- bzw. Kraftübertragungsvorrichtung 9 der Figur 1. Im Unterschied zu der Ausführung in Figur 1 verzweigt in Figur 2 die zu den Radbremsen 18c und 18d führende Bremsdruckteilleitung 122c mit dem Einlassventil 16c und dem Auslassventil 22c vor dem Trennventil 14 und dem Umschaltventil 28. Sie ist direkt an die Bremsdruckleitung 12 angeschlossen. Durch diese Ausbildung kann den Radbremsen 18c und 18d, also dem an Leitung 122c angeschlossenen Radbremsenpaar, von der Pumpe 25 kein Druckmittel zur Verfügung gestellt werden. Mittels der Auflaufbremse 80 kann jedoch während einer Stabilitätsregelung, d.h. während der seitenweisen Ansteuerung der Radbremsen 18a oder 18b, mittels der Pumpe 25, Bremsdruck in den Bremskreis mit der Bremsdruckteilleitung 122c eingesteuert werden. Der Druckabbau in den Radbremsen 18a bis 18d erfolgt entsprechend der in Figur 1 beschriebenen Weise. Der zweite Ansteuerkreis für die Stabilisierungs-Kupplung 38 entspricht der in Figur 1 näher beschriebenen Ausführung.

Figur 3 zeigt die in Figur 1 dargestellten Druck- bzw. Kraftübertragungsvorrichtung 9 mit gegenüber Figur 1 geänderter Ansteuerung der Stabilisierungs-Kugelkupplung 38. Die hydraulische Schaltung der an die Bremsleitung 12 angeschlossenen Radbremsen 18a bis 18d entspricht dabei dem in Figur 1 dargestellten und beschriebenen Ansteuerkreis und braucht daher nicht mehr näher beschrieben zu werden. Wie in Figur 3 schematisch dargestellt ist, sind die Aktuatoren 36a, 36b der Stabilisierungs-Kupplung 38 über Leitung 30 mit dem Vorratsbehälter 27 verbunden. Leitung 30 verzweigt in die Druckteilleitung 30a und eine Leitung 46. In der Druckteilleitung 30a ist ein stromlos offenes Trennventil 32 mit einem Rückschlagventil 33 angeordnet. Zwischen dem Trennventil 32 und den Aktuatoren 36a, 36b ist die Druckseite der zweiten Pumpe 48 an die Druckteilleitung 30a angeschlossen, deren Saugseite mit der Leitung 46 verbunden ist. In der Druckteilleitung 30a ist zwischen der Anschlussstelle der Saugseite der Pumpe 48 und den Aktuatoren 36a, 36b der Stabilisierungs-Kupplung 38 der Drucksensor 101 angeordnet.
Nach Ansteuerung der Pumpe 48 durch die elektronische Regeleinheit 62 fördert die Pumpe 48 zur Stabilisierung des Anhängers Druckmittel aus dem Vorratsbehälter 27 zu den Aktuatoren 36a, 36b. Über die Schaltintervalle "offen/zu" des Trennventils 32 kann nun ein vorgegebener, mit dem Drucksensor 101 ermittelter Druck in den Aktuatoren 36a, 36b eingestellt werden.

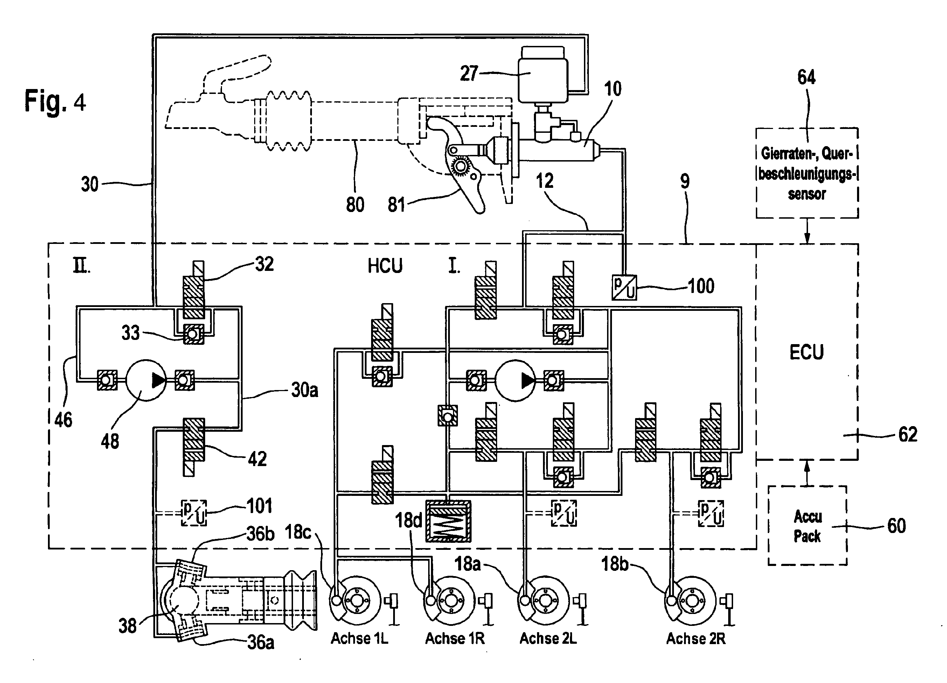

Figur 4 zeigt eine Abwandlung des Stabilisierungs-Kupplungs-Kreises der Figur 3. Im Unterschied zu der Schaltungsvariante der Figur 3 ist in der Druckteilleitung 30a zwischen der Anschlussstelle der Saugseite der Pumpe 48 und der Anschlussstelle des Drucksensors 101 ein ein stromlos geschlossenes Auslassventil 42 als Absperrventil vorgesehen. Mittels dem Ventil 42 kann der in die Aktuatoren 36a, 36b der Stabilisierungs-Kupplung eingesteuerte Druck bei geöffnetem Trennventil 32 eingesperrt bzw. gehalten werden.

Die Stabilisierungs-Kupplung kann bei allen Ausführungsvarianten eine Entlüftungsschraube aufweisen.

Grundsätzlich sind alle beschriebenen Steuerkreise I, II miteinander kombinierbar.

Auch ist nach einer vorteilhaften Ausbildung anstatt oder in Kombination mit zwei Radbremsen ein hydraulischer Zylinder für eine Seilzugbremse anschließbar, wie sie z.B. bei einer elektronischen Parkbremse verwendet wird. So können zwei Räder über die Radbremsen gebremst werden, die Stabilisierungs-Kupplung angesteuert werden und eine Seilzugbremse des Anhängers betätigt werden.

## Patentansprüche

1. Hydraulische Anhängerbremsanlage mit einer Einrichtung (80) zum Abbremsen der Räder des Anhängers und mit einem steuerbaren Druckerzeuger (9) zur rad- oder achsindividuellen Ansteuerung der Radbremsen(18a, 18b, 18c, 18d), wobei der Einrichtung (80) eine hydraulische Bremskraftübertragungsvorrichtung mit einem Vorratsbehälter (27) für das Druckmittel und einem Hauptbremszylinder (10) zugeordnet ist und die Bremskraftübertragungsvorrichtung über Bremsleitungen mit den Radbremsen (18a, 18b, 18c, 18d) verbunden ist, sowie einer elektronischen Steuer- oder Regelungseinheit (62), die über eine Versorgungseinheit (60) Energie erhält, **dadurch gekennzeichnet, dass** der Hauptbremszylinder (10) mit einer Bremsleitung (12) verbunden ist, in der ein erstes Trennventil (14) angeordnet ist,
dass die Bremsleitung (12) nach dem ersten Trennventil (14) über eine erste Bremsdruckteilleitung (12b) mit einem ersten Einlassventil (16a) mit der ersten Radbremse (18a) und über eine zweite Bremsdruckteilleitung (12a) mit einem zweiten Einlassventil (16b) mit der zweiten Radbremse (18b) einer ersten Anhängerachse verbunden ist,
dass die Bremsleitung (12) vor oder nach dem ersten Trennventil (14) über eine dritte Bremsdruckteilleitung (12c) mit einem dritten Einlassventil (16c) mit den Radbremsen (18c, 18d) einer zweiten Anhängerachse verbunden ist,
dass in einer Bypassleitung um das erste Trennventil (14)
ein erstes Umschaltventil (28) und eine erste elektrisch ansteuerbare Druckmittelpumpe (25) vorgesehen sind, deren Saugseite mit dem ersten Umschaltventil (28), der ersten Radbremse (18a) über ein erstes Auslassventil (22b), der zweiten Radbremse über ein zweites Auslassventil (22a), den Radbremsen (18c, 18d) der zweiten Anhängerachse über ein drittes Auslassventil (22c) und einem ersten Niederdruckspeicher (23) und deren Druckseite mit dem ersten Trennventil (14) und mindestens mit dem ersten Einlassventil (16a) und dem zweiten Einlassventil (16b) verbunden ist,
und dass eine zweite Druckmittelpumpe (48) vorgesehen ist, die Druckmittel aus dem Vorratsbehälter (27) in Aktuatoren (36a, 36b) einer Stabilisierungskupplung (38) fördert, welche die Spannkraft der Stabilisierungskupplung (38) zwischen Anhänger und Zugfahrzeug verändern können.

2. Hydraulische Anhängerbremsanlage nach Anspruch 1, **dadurch gekennzeichnet, dass** der Vorratsbehälter (27) mit einer Druckleitung (30) verbunden ist, in der ein zweites Trennventil (32) über eine erste Druckteilleitung (30a) mit einem vierten Einlassventil (34) mit den Aktuatoren (36a, 36b) der Stabilisierungs-Kugelkupplung (38) verbunden ist, die Aktuatoren (36a, 36b) mit einer Druck-Rücklaufleitung (40) verbunden sind, in der ein viertes Auslassventil (42) angeordnet ist, wobei die Druck-Rücklaufleitung (40) mit einem zweiten Niederdruckspeicher (44) und über eine zweite Leitung (46) mit der Saugseite der zweiten Druckmittelpumpe (48) und dem zweiten Umschaltventil (50) verbunden ist, das an die Druckleitung (30) angeschlossen ist.

3. Hydraulische Anhängerbremsanlage nach einem der vorhergehenden Ansprüche, **dadurch gekennzeichnet, dass** die Versorgungseinheit (60) Akkumulatoren enthält, die über eine Verbindungselement zwischen Fahrzeug und Anhänger mit der Batterie des Fahrzeugs verbunden sind, wobei die Akkumulatoren (60) mit der Steuer- und Regelungseinheit (62) verbunden sind.

4. Hydraulische Anhängerbremsanlage nach Anspruch 1, **dadurch gekennzeichnet, dass** der Vorratsbehälter (27) über eine Druckmittelleitung (30, 30a), in der ein zweites Trennventil (32) angeordnet ist, mit den Aktuatoren (36a, 36b) der Stabilisierungskupplung (38) verbunden ist, wobei die Saugseite der zweiten Druckmittelpumpe (48) über eine Umgehungsleitung (46) des zweiten Trennventils (32) mit dem Vorratsbehälter (27) verbunden ist.

5. Hydraulische Anhängerbremsanlage nach Anspruch 4, **dadurch gekennzeichnet, dass** in der Druckmittelleitung (30, 30a) nach dem zweiten Trennventil (32) ein viertes Auslassventil (42) angeordnet ist, wobei die Druckseite der zweiten Druckmittelpumpe (48) zwischen dem zweiten Trennventil (32) und dem vierten Auslassventil (42) in die Druckmittelleitung (30a) mündet.

## Claims

1. Hydraulic trailer brake system having a device (80) for braking the wheels of the trailer and having a controllable pressure generator (9) for actuating the wheel brakes (18a, 18b, 18c, 18d) in a wheel-individual or axle-individual manner, the device (80) being assigned a hydraulic brake-force transmission apparatus with a storage reservoir (27) for the pressure medium and a brake master cylinder (10), and the brake-force transmission apparatus being connected via brake lines to the wheel brakes (18a, 18b, 18c, 18d), and an electronic control or regulating unit (62) which obtains energy via a supply unit (60), **characterized in that** the brake master cylinder (10) is connected to a brake line (12), in which a first separating valve (14) is arranged, **in that** the brake line (12) is connected downstream of the first separating valve (14) via a first brake-pressure part line (12b) with a first inlet valve (16a) to the first wheel brake (18a) and via a second brake-pressure part line (12a) with a second inlet valve (16b) to the second wheel brake (18b) of a first trailer axle, **in that** the brake line (12) is connected upstream or downstream of the first separating valve (14) via a third brake-pressure part line (12c) with a third inlet valve (16c) to the wheel brakes (18c, 18d) of a second trailer axle, **in that** a first switchover valve (28) and a first electrically actuable pressure-medium pump (25) are provided in a bypass line around the first separating valve (14), the suction side of which pressure-medium pump (25) is connected to the first switchover valve (28), the first wheel brake (18a) via a first outlet valve (22b), the second wheel brake via a second outlet valve (22a), the wheel brakes (18c, 18d) of the second trailer axle via a third outlet valve (22c), and a first low-pressure accumulator (23), and the pressure side of which pressure-medium pump (25) is connected to the first separating valve (14) and at least to the first inlet valve (16a) and the second inlet valve (16b), and **in that** a second pressure-medium pump (48) is provided which conveys pressure medium from the storage reservoir (27) into actuators (36a, 36b) of a stabilizing coupling (38), which actuators (36a, 36b) can change the tensioning force of the stabilizing coupling (38) between the trailer and towing vehicle.

2. Hydraulic trailer brake system according to Claim 1, **characterized in that** the storage reservoir (27) is connected to a pressure line (30), in which a second separating valve (32) is connected via a first pressure part line (30a) with a fourth inlet valve (34) to the actuators (36a, 36b) of the stabilizing ball coupling (38), and the actuators (36a, 36b) are connected to a pressure return line (40), in which a fourth outlet valve (42) is arranged, the pressure return line (40) being connected to a second low-pressure accumulator (44) and via a second line (46) to the suction side of the second pressure-medium pump (48) and the second switchover valve (50) which is connected to the pressure line (30).

3. Hydraulic trailer brake system according to one of the preceding claims, **characterized in that** the supply unit (60) comprises rechargeable batteries which are connected via a connecting element between the vehicle and trailer to the battery of the vehicle, the rechargeable batteries (60) being connected to the control and regulating unit (62).

4. Hydraulic trailer brake system according to Claim 1, **characterized in that** the storage reservoir (27) is connected to the actuators (36a, 36b) of the stabilizing coupling (38) via a pressure-medium line (30, 30a), in which a second separating valve (32) is arranged, the suction side of the second pressure-medium pump (48) being connected to the storage reservoir (27) via a bypass line (46) of the second separating valve (32).

5. Hydraulic trailer brake system according to Claim 4, **characterized in that** a fourth outlet valve (42) is arranged in the pressure-medium line (30, 30a) downstream of the second separating valve (32), the pressure side of the second pressure-medium pump (48) opening between the second separating valve (32) and the fourth outlet valve (42) into the pressure-medium line (30a).

## Revendications

1. Système de freinage hydraulique pour remorque, comprenant un dispositif (80) pour freiner les roues de la remorque et comprenant un générateur de pression commandable (9) pour commander, pour chaque roue individuelle ou pour chaque essieu individuel, des freins de roue (18a, 18b, 18c, 18d), le dispositif (80) étant associé à un dispositif hydraulique de transfert de la force de freinage comprenant un réservoir (27) pour le fluide sous pression et un cylindre de frein principal (10) et le dispositif de transfert de la force de freinage étant connecté par le biais de conduites de frein aux freins de roue (18a, 18b, 18c, 18d), ainsi qu'une unité électronique de commande ou de régulation (62), laquelle reçoit de l'énergie par le biais d'une unité d'alimentation (60), **caractérisé en ce que** le cylindre de frein principal (10) est connecté à une conduite de frein (12) dans laquelle est disposée une première soupape de coupure (14),
la conduite de frein (12), après la première soupape de coupure (14), est connectée, par le biais d'une première conduite partielle de pression de freinage (12b) comprenant une première soupape d'entrée (16a), au premier frein de roue (18a) et, par le biais d'une deuxième conduite partielle de pression de freinage (12a) comprenant une deuxième soupape d'entrée (16b), au deuxième frein de roue (18b) d'un premier essieu de la remorque,
la conduite de frein (12), avant ou après la première soupape de coupure (14), est connectée par le biais d'une troisième conduite partielle de pression de freinage (12c) comprenant une troisième soupape d'entrée (16c) aux freins de roue (18c, 18d) d'un deuxième essieu de la remorque,
dans une conduite de dérivation contournant la première soupape de coupure (14) sont prévues une première soupape de commutation (28) et une première pompe de fluide sous pression (25) à commande électrique, le côté d'aspiration de la pompe étant connecté à la première soupape de commutation (28), au premier frein de roue (18a) par le biais d'une première soupape de sortie (22b), au deuxième frein de roue par le biais d'une deuxième soupape de sortie (22a), aux freins de roue (18c, 18d) du deuxième essieu de la remorque par le biais d'une troisième soupape de sortie (22c) et à un premier accumulateur basse pression (23) et le côté de pression de la pompe étant connecté à la première soupape de coupure (14) et au moins à la première soupape d'entrée (16a) et à la deuxième soupape d'entrée (16b),
et une deuxième pompe de fluide sous pression (48) est prévue, laquelle refoule du fluide sous pression depuis le réservoir (27) dans les actionneurs (36a, 36b) d'un accouplement de stabilisation (38) qui peuvent modifier la force de serrage de l'accouplement de stabilisation (38) entre la remorque et le véhicule tracteur.

2. Système de freinage hydraulique pour remorque selon la revendication 1, **caractérisé en ce que** le réservoir (27) est connecté à une conduite de pression (30) dans laquelle une deuxième soupape de coupure (32) est connectée par le biais d'une première conduite partielle de pression (30a) comprenant une quatrième soupape d'entrée (34) aux actionneurs (36a, 36b) de l'accouplement sphérique de stabilisation (38), les actionneurs (36a, 36b) sont connectés à une conduite de retour de pression (40) dans laquelle est disposée une quatrième soupape de sortie (42), la conduite de retour de pression (40) étant connectée à un deuxième accumulateur basse pression (44) et par le biais d'une deuxième conduite (46) au côté d'aspiration de la deuxième pompe de fluide sous pression (48) et à la deuxième soupape de commutation (50) qui est raccordée à la conduite de pression (30).

3. Système de freinage hydraulique pour remorque selon l'une quelconque des revendications précédentes, **caractérisé en ce que** l'unité d'alimentation (60) contient des accumulateurs qui sont connectés par le biais d'un élément de liaison entre le véhicule et la remorque à la batterie du véhicule, les accumulateurs (60) étant connectés à l'unité de commande et de régulation (62).

4. Système de freinage hydraulique pour remorque selon la revendication 1, **caractérisé en ce que** le réservoir (27) est connecté par le biais d'une conduite de fluide sous pression (30, 30a), dans laquelle est disposée une deuxième soupape de coupure (32), aux actionneurs (36a, 36b) de l'accouplement de stabilisation (38), le côté d'aspiration de la deuxième pompe de fluide sous pression (48) étant connecté par le biais d'une conduite de contournement (46) de la deuxième soupape de coupure (32) au réservoir (27).

5. Système de freinage hydraulique pour remorque selon la revendication 4, **caractérisé en ce que** dans la conduite de fluide sous pression (30, 30a) après la deuxième soupape de coupure (32) est disposée une quatrième soupape de sortie (42), le côté de pression de la deuxième pompe de fluide sous pression (48) débouchant dans la conduite de fluide sous pression (30a) entre la deuxième soupape de coupure (32) et la quatrième soupape de sortie (42).
